# FASCICULE DE BREVET EUROPEEN

(11) **EP 2 621 771 B1**
(45) Date de publication et mention de la délivrance du brevet: **18.09.2019**
(21) Numéro de dépôt: 11741220.5
(22) Date de dépôt: 08.08.2011
(51) Int. Cl.: B60S 1/08, B60S 1/16

(54) **SUPPORT D'UN GROUPE ÉELECTRIQUE D'ENTRAINEMENT D'UN SYSTÈME D'ESSUYAGE, COMPRENANT UN DISSIPATEUR THERMIQUE**
STÜTZE FÜR EINE ELEKTRISCHE ANTRIEBSEINHEIT EINES WISCHERSYSTEMS MIT EINEM KÜHLKÖRPER
SUPPORT FOR AN ELECTRIC DRIVE UNIT OF A WIPER SYSTEM, INCLUDING A HEAT DISSIPATOR

(30) Priorité: 29.09.2010 FR 1003856
(43) Date de publication de la demande: 07.08.2013
(73) Titulaire: Valeo Systèmes d'Essuyage, 78322 Le Mesnil Saint Denis (FR)
(72) Inventeur: CATHALA, Franck, F-81170 St Martin Laguepie (FR); GRANDJEAN, Denis, F-78660 Ablis (FR)
(74) Mandataire: Callu-Danseux, Violaine
(86) Numéro de dépôt international: PCT/EP2011/063642
(87) Numéro de publication internationale: WO 2012/041587

(56) Documents cités:
- DE-A1-102007 031 850
- DE-A1-102008 001 359
- FR-A1- 2 885 099
- JP-A- 2004 320 879
- JP-A- 2005 094 821

## Description

Le domaine de la présente invention est celui des équipements pour les véhicules, et plus particulièrement celui des équipements pour l'essuyage des vitrages des automobiles.

Les automobiles sont couramment équipées de systèmes d'essuie-glace pour assurer un lavage du pare-brise et éviter que la vision qu'a le conducteur de son environnement soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent liquide en l'amenant en dehors du champ de vision du conducteur.

Il est connu d'entrainer deux bras d'essuyage au moyen d'un unique moteur électrique. Le mouvement de va-et-vient des deux bras est alors assuré par un mécanisme de timonerie qui relie l'axe du moteur électrique à des axes d'entraînement des bras. Le mécanisme de timonerie et le moteur électrique sont en général installés en pied de pare-brise dans une zone appelé baie de pare-brise. Cette zone est abondamment arrosée par les projections d'eau qui proviennent des conditions de roulage et/ou d'essuyage du véhicule.

Le mécanisme de timonerie transforme un mouvement de rotation à sens constant en un mouvement de va-et-vient du bras, ce qui implique l'utilisation de nombreuses pièces et articulations qui provoquent des pannes et grèvent les coûts.

Par ailleurs, le contrôle de ce moteur électrique est opéré par un dispositif de commande distinct et séparé du moteur, localisé dans l'habitacle du véhicule. Ce dispositif est généralement simple et ne nécessite pas de moyen particulier pour assurer son refroidissement.

Cette technologie est maintenant supplantée par un nouveau système d'essuyage où le mécanisme de timonerie est supprimé. Ce système d'essuyage comprend alors deux ensembles formés chacun par un moteur électrique, un dispositif de commande du moteur, une platine de fixation du moteur, un bras et un balai. Ainsi, le mouvement de va-et-vient des deux bras doit être coordonné pour éviter que ces bras n'entrent en collision l'un contre l'autre. Une telle synchronisation est mise en oeuvre par le dispositif de commande de chaque ensemble et fait appel à des moyens techniques, en particulier électroniques, qui sont plus nombreux et plus importants que ceux employés dans une solution à mécanisme de timonerie.

L'importance de ces moyens électroniques implique un inconvénient. En effet, le moteur électrique et son dispositif de commande étant installés dans une zone du véhicule peu ventilée, ces derniers encourent des avaries thermiques par absence de refroidissement.

Ceci représente un inconvénient majeur que l'invention se propose de résoudre principalement en mettant à profit le support qui relie un groupe électrique d'actionnement du bras d'essuyage à la caisse du véhicule. Ce support présente ainsi une fonction supplémentaire qui vise à refroidir le groupe électrique d'actionnement par conduction thermique au travers du support, ce dernier comprenant une conformation dédiée pour capter les calories en provenance du groupe électrique d'actionnement et les dissiper dans l'air environnant le support.

Le document JP 2005 094821 A1 montre un support de groupe électrique d'actionnement de système d'essuyage selon le préambule de la première revendication.

L'invention a donc pour objet un support destiné à relier au moins mécaniquement un véhicule à un groupe électrique d'actionnement d'un système d'essuyage innovant en ce qu'il comprend un dissipateur thermique apte à dissiper un flux thermique en provenance du groupe électrique d'actionnement.

Selon l'invention, le dissipateur thermique comprend au moins une paroi constituant un corps du support, ladite paroi étant apte à être mise en contact du groupe électrique d'actionnement.

La paroi s'étend dans un plan parallèle et distinct d'un plan dans lequel le corps s'étend de sorte à former une cavité présentant un orifice.

Selon une autre caractéristique de l'invention, la cavité comprend au moins une ailette de refroidissement.

Selon l'invention le support comprend un dispositif de canalisation d'un liquide, dans lequel l'orifice forme une évacuation de liquide. Avantageusement, l'orifice est adjacent à la paroi.

Avantageusement encore, le support comprend un dispositif de canalisation de liquide. Le support relie de manière isostatique le groupe électrique d'actionnement avec la caisse du véhicule. On notera tout particulièrement que l'orifice, autrement appelé évidement, forme une évacuation d'un liquide.

Avantageusement encore, le support comprend un corps et au moins une excroissance issue du corps et formant bras de fixation sur le véhicule, un dispositif de solidarisation sur le véhicule étant formé sur un bout de l'excroissance.

Selon une amélioration de l'invention, le dissipateur est formé sur le support dans le prolongement d'une excroissance, l'orifice étant contenu dans une largeur de l'excroissance.

Selon une autre caractéristique, le support est fabriqué dans un matériau thermiquement conducteur.

L'invention couvre également un ensemble constitutif d'un système d'essuyage comprenant un groupe électrique d'actionnement et un support selon l'une quelconque des caractéristiques précédentes, le groupe électrique d'actionnement comprenant un plat en contact avec le dissipateur thermique.

Avantageusement, le groupe électrique d'actionnement comprend un axe d'entraînement directement relié au bras d'essuyage.

Le plat s'étend dans un plan parallèle à un plan d'extension d'une paroi constitutive du dissipateur thermique.

Avantageusement encore, le groupe électrique d'actionnement comprend un dispositif de commande constitué d'au moins composant électronique de puissance, le composant étant en contact avec le plat.

Enfin, l'invention vise un système d'essuyage comprenant un bras d'essuyage et un ensemble tel que présenté ci-dessus.

Selon une caractéristique intéressante de l'invention, le dispositif de canalisation est agencé pour évacuer le liquide hors d'une périphérie externe du groupe électrique d'actionnement. La périphérie externe du groupe électrique d'actionnement est définie par sa section dans une direction verticale. Autrement dit, il importe que l'évacuation soit effective quand le support est installé angulairement sur le véhicule.

Selon une deuxième caractéristique intéressante de l'invention, le dispositif de canalisation comprend un fond et au moins une nervure qui délimitent une zone de canalisation de liquide. Cette dernière forme une retenue du liquide pour éviter que ce dernier ne tombe sur le groupe électrique d'actionnement.

Selon encore une caractéristique de l'invention, la nervure entoure la zone de canalisation de liquide et comprend au moins un évidement ou orifice autorisant l'évacuation du liquide. La nervure fait donc le tour du support. L'évidement ou orifice est par exemple formé par un enlèvement de matière au niveau de la nervure ou au niveau du dissipateur thermique mais il peut également s'agir d'un orifice pratiqué dans la paroi ou dans la nervure, cet orifice pouvant entre autre présenter une section de forme circulaire ou oblongue.

Selon encore une autre caractéristique de l'invention, la nervure est réalisée, par exemple par moulage, sur un bord périphérique du fond.

Avantageusement, la nervure s'étend selon un sens identique à un sens d'extension d'un bossage apte à recevoir au moins partiellement le groupe électrique d'actionnement et formé sur le fond. On comprend donc que le groupe électrique d'actionnement se fixe contre une face du support alors que la zone de canalisation, délimitée par le fond et la nervure périphérique, est réalisée sur l'autre face du support, opposée à la face contre laquelle le groupe électrique d'actionnement est fixé.

Selon une caractéristique de l'invention, l'excroissance, le corps et notamment le fond, le bossage et le dissipateur forment un ensemble unitaire, fabriqué en une seule étape de moulage. La nervure peut également être formée de manière unitaire avec ces composants.

Selon une deuxième caractéristique de l'invention, le support comprend au moins deux moyens de fixation du groupe électrique d'actionnement, au moins un de ces moyens étant pratiqué au niveau du fond alors que l'autre de ces moyens est pratiqué au niveau de l'excroissance.

Un premier avantage de l'invention réside dans la possibilité de refroidir les éléments constitutifs du groupe électrique d'actionnement, ces éléments étant un moteur électrique, un boîtier intermédiaire et/ou le dispositif de commande du moteur électrique.

Un autre avantage de l'invention réside dans la possibilité de canaliser le liquide avant que ce dernier n'atteigne le groupe électrique d'actionnement du bras d'essuyage. Le support est ainsi agencé pour conduire ce liquide et autoriser son évacuation en un endroit sans risque pour le groupe électrique d'actionnement, c'est-à-dire un endroit où le liquide ne peut pas entrer en contact celui-ci.

On fiabilise ainsi le groupe électrique d'actionnement en refroidissant les composants électroniques de puissance et/ou en le protégeant des projections de liquide au moyen d'un support mécanique qui présentent une fonction de refroidissement et/ou une fonction de canalisation d'un liquide.

D'autres caractéristiques, détails et avantages de l'invention ressortiront plus clairement à la lecture de la description donnée ci-après à titre indicatif en relation avec des dessins dans lesquels :
- la figure 1 est une vue en perspective illustrant l'ensemble comprenant le support et le groupe électrique s'actionnement du bras d'essuyage selon l'invention,
- la figure 2 est une vue en perspective montrant une première variante du dissipateur thermique selon l'invention,
- la figure 3 est une vue en perspective de l'orifice d'évacuation de liquide selon l'invention,
- la figure 4 est une vue en perspective montrant une deuxième variante du dissipateur thermique selon l'invention,
- la figure 5 est une vue en coupe illustrant la coopération entre le dissipateur thermique et le groupe électrique d'actionnement.

Il faut noter que les figures exposent l'invention de manière détaillée pour mettre en oeuvre l'invention, lesdites figures pouvant bien entendu servir à mieux définir l'invention le cas échéant.

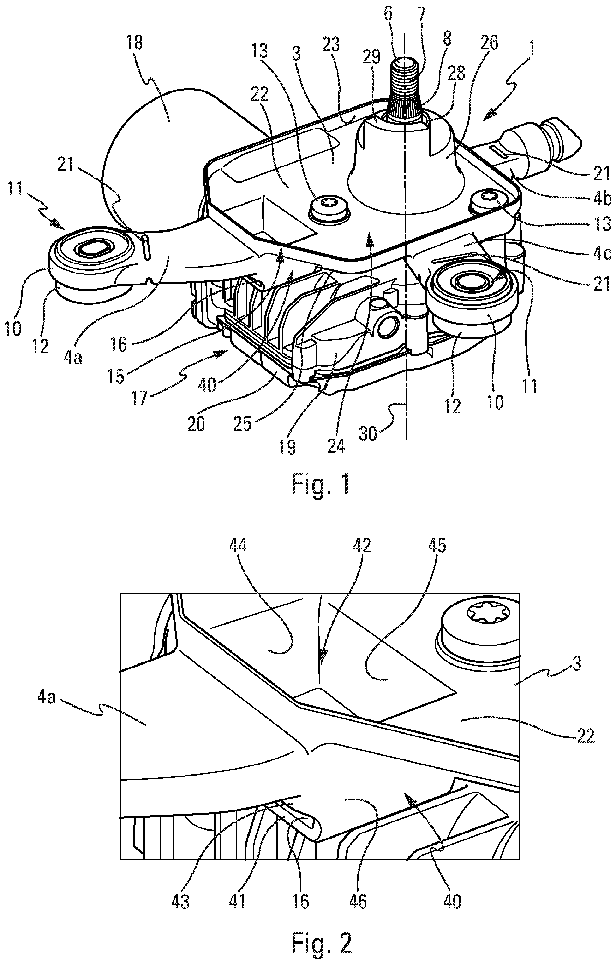

La figure 1 illustre un support 1 conforme à l'invention. Ce support 1 est monté sur un véhicule automobile en bordure inférieure d'un pare-brise équipant le véhicule. Le support 1 comprend un corps 3 à la limite duquel nait au moins une excroissance. Dans cette exemple de réalisation, le support comprend trois excroissances référencées 4a, 4b et 4c qui prennent chacune la forme d'un bras. Ces excroissances 4a, 4b et 4c ont pour fonction de relier mécaniquement le corps 3 à une caisse ou châssis du véhicule.

Un axe d'entrainement 6 d'un groupe électrique d'actionnement 17 traverse de part en part le corps 3. Une extrémité libre de cet axe d'entrainement 6 présente une section filetée 7 et une section conique 8, qui peut par exemple être cannelée ou striée, de sorte à garantir l'absence de mouvement relatif entre l'axe d'entrainement 6 et un bras d'essuyage du système d'essuyage, ce bras étant porteur d'un balai d'essuyage.

Une extrémité libre 10 de chaque excroissance 4 comprend un dispositif de solidarisation 11 qui participe à la fixation mécanique du support 1 sur la caisse du véhicule. Le dispositif de solidarisation comprend un moyen d'amortissement 12 dont la fonction est d'atténuer la transmission de vibrations du support 1 vers la caisse.

Le groupe électrique d'actionnement 17 est ici placé derrière le support 1. Ce groupe électrique d'actionnement 17 est retenu mécaniquement, de manière isostatique mais amovible, sur le support 1 par au moins un moyen de fixation. Dans cette exemple de réalisation, le groupe électrique est solidarisé mécaniquement sur le support 1 par trois moyens de fixation qui prennent ici chacun la forme d'une vis 13 qui passe au travers d'un trou pratiqué dans le support pour se visser dans un taraudage effectué dans le groupe électrique d'actionnement 17.

Cette figure 1 montre encore l'ensemble constitué par le support 1 et le groupe électrique d'actionnement 17. Un bras d'essuyage (non représenté) est solidarisé directement sur l'axe d'entrainement 6 du groupe électrique d'actionnement 17. Le mouvement de rotation de cet axe est donc directement transmis au bras sans intermédiaire, comme un mécanisme de timonerie connu de l'art antérieur.

Le groupe électrique d'actionnement 17 comprend trois parties principales : un moteur électrique 18, un boîtier intermédiaire 19 et un dispositif de commande 20 du moteur électrique.

Le moteur électrique 18 est par exemple un moteur à courant continu. Ce moteur électrique 18 est piloté ou commandé par le dispositif de commande 20 qui gère notamment les mises en marche et mises à l'arrêt, les temps d'actionnement du moteur électrique 18 et l'accélération ou la décélération du moteur électrique 18 nécessaire à la fonction de synchronisation avec le second groupe électrique d'actionnement qui équipe le véhicule. Ce dispositif de commande 20 communique électriquement avec un dispositif de commande de ce second groupe électrique d'actionnement qui entraine un deuxième balai d'essuyage sur le pare-brise. Le dispositif de commande 20 assure ainsi la fonction de synchronisation avec le dispositif de commande voisin.

Le boîtier intermédiaire 19 comprend l'axe d'entrainement référencé 6 relié mécaniquement à une roue denté qui transmet le mouvement de rotation d'un arbre équipant le moteur électrique 18. L'axe d'entraînement 6 est orienté perpendiculairement par rapport à l'arbre du moteur électrique 18.

On notera que la forme des excroissances 4a, 4b et 4c peut être identique ou différentes en raison de la disposition des points de fixation sur la caisse du véhicule. En revanche, chaque excroissance 4a, 4b et 4c comprend un moyen de rupture qui prend par exemple la forme d'une fente 21, cette dernière s'étendant dans une direction sensiblement orthogonale à une direction d'extension de l'excroissance concernée.

Pour la première excroissance 4a et la deuxième excroissance 4b, la fente 21 est pratiquée de manière immédiatement adjacente au dispositif de solidarisation 11. En revanche, pour la troisième excroissance 4c, la fente 21 est pratiquée à la naissance de la troisième excroissance 4c par rapport au corps 3.

Le support 1 comprend un dispositif de canalisation 15 d'un liquide qui peut ruisseler sur le support 1. La fonction de ce dispositif de canalisation 15 est de collecter puis canaliser le liquide pour le conduire et l'évacuer en un endroit qui ne présente pas de risque pour le groupe électrique d'actionnement 17.

En l'absence d'un tel dispositif, le liquide peut circuler sur le support 1 et en sortir en divers points de sa périphérie, certains de ces points étant en regard du groupe électrique d'actionnement 17. Le dispositif de canalisation 15 empêche donc cette sortie du liquide à la périphérie du corps 3 et le contient pour que ce liquide s'évacue naturellement par un orifice ou évidement 16.

Le dispositif de canalisation 15 comprend un fond 22 et au moins une nervure 23 qui délimitent une zone de canalisation 24 du liquide. Le fond 22 est une première face du corps 3 qui est opposée à une seconde face de ce corps, cette dernière étant tournée vers le groupe électrique d'actionnement 17. La nervure 23 forme une barrière qui maintient le liquide sur le fond 22, l'inclinaison (par exemple 25°) du support 1 un fois monté sur le véhicule favorisant l'évacuation naturelle du liquide par gravité au travers de l'orifice ou évidement 16.

Le liquide se trouve ainsi concentré par le dispositif de canalisation 15 vers l'évidement 16.

Le liquide chemine sur une face du corps 3 qui forme ainsi le fond 22 du dispositif de canalisation de liquide 15. Ce dispositif de canalisation 15 est agencé pour évacuer le liquide hors d'une périphérie externe du groupe électrique d'actionnement 17. On comprend par cela que les dimensions du corps 3 sont adaptées pour que l'évacuation du liquide par l'évidement ou orifice 16 ne puisse pas venir en contact contre le groupe électrique d'actionnement 17. A titre d'exemple, l'évidement 16 peut être pratiqué à un angle du corps 3, cet angle dépassant du volume général du groupe électrique d'actionnement 17, notamment quand ce dernier est en position de montage sur le véhicule.

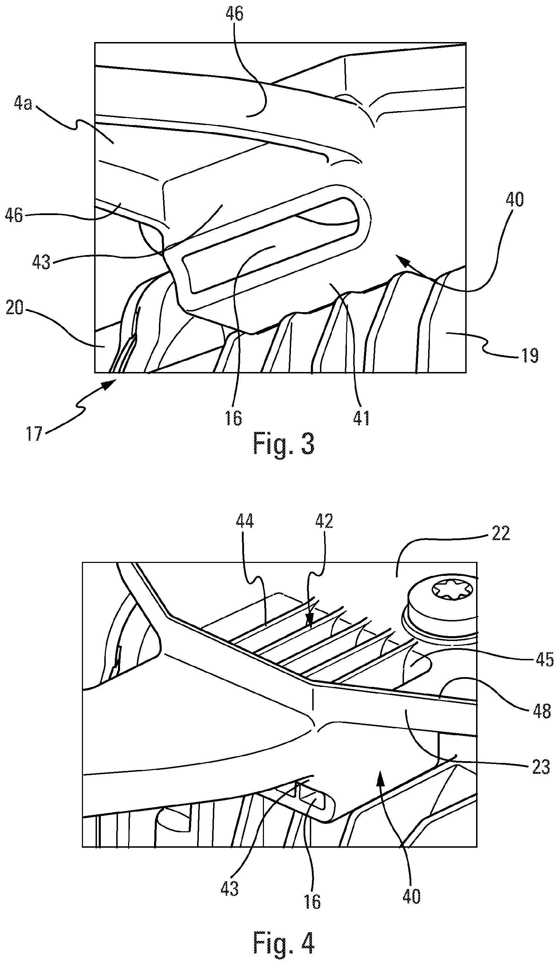

Selon un autre exemple de réalisation, l'évidement ou orifice 16 peut être réalisé au niveau d'un dissipateur thermique 40 réalisé sur le support 1, comme cela sera abordé plus en détails à la description de la figure 3.

La nervure 23 s'étend à partir d'un bord périphérique 25 qui délimite ou entoure le fond 22. Dans une autre variante de l'invention, la nervure peut être formée sur le fond 22 à distance du bord périphérique 25 pour autant que cette nervure canalise le liquide. Le bord périphérique 25 est défini comme la tranche du corps 3 qui s'étend sensiblement perpendiculairement à un plan dans lequel s'étend le fond 22.

Le support 1 comprend encore un bossage 26 qui prend naissance sur le fond 22. Ce bossage 26 délimite une zone de réception d'une partie du groupe électrique d'actionnement 17. Plus particulièrement, ce bossage loge l'axe d'entraînement 6 et une partie du boîtier intermédiaire 19. Ce bossage 26 présente un trou bordé par un flan 28 et au travers duquel l'axe d'entrainement 6 passe. Ce bossage 26 comprend également une butée 29 formée par un quart de cercle. Cette butée délimite les deux positions extrêmes que le bras peut prendre au cours de son mouvement de va-et-vient. On notera que le support est agencé pour que le liquide soit susceptible de contourner le bossage 26 et rejoindre l'évidement 16. La zone de canalisation du liquide 24 délimitée par les nervures 23 et le fond 22 s'étend donc tout autour du bossage 26 ce qui permet de capter puis d'évacuer le liquide qui atteint cette zone.

Ce bossage 26 s'étend selon un axe 30 qui est perpendiculaire, ou sensiblement perpendiculaire au plan dans lequel s'étend le fond 22. La nervure 23 s'étend dans le même sens que le sens d'extension du bossage 26. Autrement dit, la nervure 23 et le bossage 26 présentent des extrémités libres qui sont d'un même côté du corps 3.

La nervure présente une hauteur mesurée entre le fond 22 et une arête libre de la nervure comprise entre un et six millimètres. Cette fourchette de valeurs forme un bon compromis entre l'efficacité du dispositif de canalisation 15, le poids du support 1 et ses dimensions.

Le support 1 comprend le dissipateur thermique 40. Ce dernier est agencé sur le support 1 de manière à dissiper un flux thermique en provenance du groupe électrique d'actionnement 17, ce flux thermique étant consécutif aux dégagements par effet joule du moteur électrique 18 et/ou du dispositif de commande 20.

La figure 2 montre une première variante de réalisation de ce dissipateur thermique 40. Ce dernier est formé par une paroi 41 qui fait partie du corps 3. Cette paroi 41 forme ainsi une partie du corps dédiée à la conduction thermique. Cette paroi 41 est mise en contact contre une zone particulière du groupe électrique d'actionnement 17.

On notera tout particulièrement que la paroi 41 s'étend dans un plan distinct du plan dans lequel le corps 3 s'étend. Selon un premier mode de réalisation, le plan dans lequel s'étend la paroi est parallèle au plan du fond 22. On comprend ainsi que la paroi 41 est décalée par rapport au fond 22, formant ainsi une cavité 42. Cette dernière est ainsi délimitée par la paroi 41 et quatre flans périphériques 43, 44, 45 et 46 qui joignent le fond 22 à la paroi 41. A titre d'exemple, la section de la cavité est rectangulaire.

Le dissipateur thermique 40 est formé en une zone particulière du support. En effet, la cavité 42 peut par exemple être fabriquée dans le prolongement d'une des excroissances, par exemple la première excroissance 4a. On comprend ici que la distance qui sépare un deuxième flan périphérique 42 d'un troisième flan périphérique 43 est inférieure ou égale à une largeur du bras formant la première excroissance 4a à sa naissance sur le corps 3, sa longueur étant définie par une direction qui passe par le corps 3 et l'extrémité libre de l'excroissance.

La figure 3 montre le dissipateur thermique 40 vue du dessous, c'est-à-dire à partir du groupe électrique d'actionnement 17. La plus grande dimension de l'orifice 16 est contenue dans une largeur de la première excroissance 4a, cette dernière étant renforcée par deux bords tombés 46.

L'orifice 16 forme un trou oblong réalisé dans la partie basse de la cavité 42, ce qui permet de garantir que le liquide qui pourrait s'accumuler dans la cavité est évacué. En pratique, ce trou est effectué à l'angle de la paroi 41 et du premier flan périphérique 43, c'est-à-dire le flan sur lequel nait la première excroissance 4a. On comprend donc que l'orifice 16 est adjacent, avantageusement de manière immédiate, à la paroi 41.

La paroi 41 est en contact direct, c'est-à-dire plan sur plan, avec une enveloppe du boîtier intermédiaire 19 qui délimite ce dernier vis-à-vis de l'extérieur. Ainsi, un flux thermique présent sur cette enveloppe peut être transmit par conduction au dissipateur thermique 40, et plus particulièrement à la paroi 41. Comme le matériau constituant le support est thermiquement conducteur, ce flux thermique rayonne alors dans la paroi 41 ainsi que dans les flans périphériques 43, 44, 45 et 46. On augmente ainsi la surface d'échange avec l'air environnant le support 1 ce qui garantit le refroidissement du groupe électrique d'actionnement 17, sans pour autant augmenter les dimensions du support 1.

La figure 4 illustre une deuxième variante de réalisation du dissipateur thermique 40. La surface d'échange avec l'air est augmentée au moyen d'au moins une ailette de refroidissement 47. Dans l'exemple de cette figure, le dissipateur thermique 40 comprend cinq ailettes de refroidissement réparties par exemple à l'intérieur de la cavité 42.

Il est avantageux que la ou les ailettes de refroidissement 47 prennent naissance sur le premier flan périphérique 43 et se termine sur le troisième flan périphérique 45 car leurs coopérations avec l'orifice 16 évitent toute formation de retenue de liquide à l'intérieur de la cavité 42. Ces ailettes de refroidissement se terminent dans le prolongement du fond 22 au droit de la cavité 42 mais l'invention couvre également le cas où ces ailettes de refroidissement 47 dépassent du fond 22 pour se terminer par exemple au niveau de l'arête vive 48 formée à l'extrémité libre de la nervure 23. Une telle situation permet notamment d'augmenter la surface d'échange avec l'air.

Il également envisagé que ces ailettes de refroidissement 47 se terminent à l'intérieur de la cavité 42, leurs tranches terminales s'étendant par exemple dans un plan contenu entre le plan de la paroi 41 et le plan du fond 22.

Ces ailettes de refroidissement 47 sont issues du même matériau que celui qui forme le dissipateur thermique 40, ce dernier étant réalisé simultanément, par exemple par moulage, et avec le même matériau de réalisation du support 1.

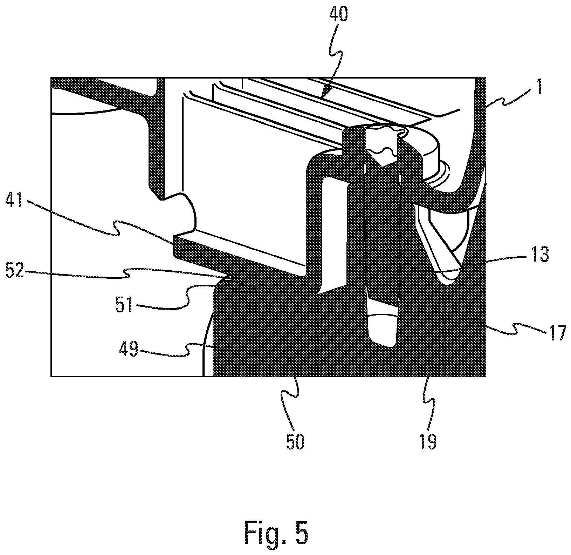

La figure 5 montre le transfert thermique entre le groupe électrique d'actionnement 17 et le dissipateur thermique 40.

Le boîtier intermédiaire 19 est par exemple fabriqué dans un matériau thermiquement conducteur tel qu'un métal, notamment un alliage d'aluminium. Ce boîtier intermédiaire 19 comprend un logement 49 qui reçoit au moins un composant électronique de puissance 50 constitutif du dispositif de commande 20. On comprend ainsi que ce dernier s'étend en partie à l'intérieur de l'enveloppe qui délimite le boîtier intermédiaire 19. A titre d'exemple, ce ou ces composants électroniques de puissance sont des transistors de type MOSFET.

Ce composant électronique de puissance est installé en regard du dissipateur thermique 40 formé sur le support 1. Le logement 49 est ainsi délimité au moins par un plat 51 formé par l'enveloppe du boîtier intermédiaire 19, ce plat 51 étant en contact thermique avec le dissipateur thermique. Ainsi, le plat s'étend dans un plan parallèle au plan dans lequel s'étend la paroi 41 constitutive du dissipateur thermique 40. Ce plat 51 est également en contact thermique avec le ou les composants électroniques de puissance 50 du dispositif de commande 20.

Ce contact peut être réalisé par un appui direct du plat 51 contre la paroi 41 mais il peut également être envisagé qu'une couche 52 de graisse thermique soit intercalée entre la paroi 41 et le plat 51. Cette couche 51 sert d'interface flexible susceptible d'absorber les écarts de tolérances ainsi que les aspérités qui peuvent survenir sur la plat 51 et/ou sur la paroi 41.

Un moyen de fixation qui prend la forme notamment d'une vis 13 est également représenté sur cette figure 5. Ce moyen de fixation établit un lien isostatique entre le support 1 et le groupe électrique d'actionnement 17. Ce moyen de fixation est immédiatement adjacent au dissipateur thermique 40 de sorte à garantir le contact thermique entre la paroi 41 et le plat 51 lors du serrage de la vis 13.

On notera que le support 1 comprenant le corps 3, avantageusement constitué par le fond 22, les trois excroissances 4a, 4b et 4c et le dissipateur thermique 40 forment un ensemble unitaire, c'est-à-dire indémontable sans une destruction de l'un des éléments. Le bossage 26 et la nervure 23 peuvent aussi faire partie de l'ensemble unitaire.

Avantageusement, ce support 1 comprenant ces éléments est réalisé par moulage.

La matière utilisée pour former le support 1 est thermo-conductrice, par exemple un alliage d'aluminium.

## Revendications

1. Support (1) destiné à relier au moins mécaniquement un véhicule à un groupe électrique d'actionnement (17) d'un système d'essuyage, le support (1) comprenant un dissipateur thermique (40) apte à dissiper un flux thermique en provenance du groupe électrique d'actionnement (17), le dissipateur thermique (40) comprenant au moins une paroi (41) constituant un corps (3) du support (1), ladite paroi (41) étant apte à être mise en contact du groupe électrique d'actionnement (17), la paroi (41) s'étendant en outre dans un plan parallèle et distinct d'un plan dans lequel le corps (3) s'étend de sorte à former une cavité (42) présentant un orifice (16), **caractérisé en ce qu'**il comprend un dispositif de canalisation (15) d'un liquide, dans lequel l'orifice (16) forme une évacuation du liquide.

2. Support selon la revendication 1, dans lequel la cavité (42) comprend au moins une ailette de refroidissement (47).

3. Support selon la revendication 1 ou 2, dans lequel l'orifice (16) est adjacent à la paroi (41).

4. Support selon l'une quelconque des revendications précédentes, comprenant au moins une excroissance (4a, 4b, 4c) issue du corps (3) et formant bras de fixation sur le véhicule, un dispositif de solidarisation (11) sur le véhicule étant formé sur un bout de l'excroissance.

5. Support selon la revendication 4, dans lequel le dissipateur thermique (40) est formé sur le support (1) dans le prolongement d'une excroissance (4a, 4b, 4c), l'orifice (16) étant contenu dans une largeur de l'excroissance.

6. Support selon l'une quelconque des revendications précédentes, dans lequel le support (1) est fabriqué dans un matériau thermiquement conducteur.

7. Ensemble constitutif d'un système d'essuyage comprenant un groupe électrique d'actionnement (17) et un support (1) selon l'une quelconque des revendications précédentes, le groupe électrique d'actionnement (17) comprenant un plat (51) en contact avec le dissipateur thermique (40).

8. Ensemble selon la revendication 7, dans lequel le groupe électrique d'actionnement (17) comprend un dispositif de commande (20) constitué d'au moins composant électronique de puissance (50), le composant électronique de puissance étant en contact avec le plat (51).

9. Système d'essuyage comprenant un bras d'essuyage (9) et un ensemble selon l'une quelconque des revendications 7 ou 8.

## Patentansprüche

1. Stütze (1), die dazu vorgesehen ist, zumindest mechanisch ein Fahrzeug mit einer elektrischen Antriebseinheit (17) eines Wischersystems zu verbinden, wobei die Stütze (1) einen Kühlkörper (40) umfasst, der zum Ableiten eines von der elektrischen Antriebseinheit (17) kommenden Wärmestroms in der Lage ist, wobei der Kühlkörper (40) mindestens eine Wand (41) umfasst, die einen Körper (3) der Stütze (1) bildet, wobei die Wand (41) mit der elektrischen Antriebseinheit (17) in Kontakt gebracht werden kann, wobei sich die Wand (41) des Weiteren in einer Ebene erstreckt, die zu einer Ebene, in der sich der Körper (3) erstreckt, parallel und von dieser getrennt ist, so dass ein Hohlraum (42), der eine Öffnung (16) aufweist, gebildet wird, **dadurch gekennzeichnet, dass** sie eine Flüssigkeitsleitungsvorrichtung (15) umfasst, wobei die Öffnung (16) einen Flüssigkeitsauslass bildet.

2. Stütze nach Anspruch 1, wobei der Hohlraum (42) mindestens eine Kühlrippe (47) umfasst.

3. Stütze nach Anspruch 1 oder 2, wobei sich die Öffnung (16) neben der Wand (41) befindet.

4. Stütze nach einem der vorhergehenden Ansprüche, die mindestens einen Vorsprung (4a, 4b, 4c) umfasst, der von dem Körper (3) abgeht und einen Arm zur Fixierung an dem Fahrzeug bildet, wobei eine Vorrichtung (11) zur Befestigung an dem Fahrzeug an einem Ende des Vorsprungs ausgebildet ist.

5. Stütze nach Anspruch 4, wobei der Kühlkörper (40) an der Stütze (1) in der Verlängerung eines Vorsprungs (4a, 4b, 4c) ausgebildet ist, wobei die Öffnung (16) in einer Breite des Vorsprungs enthalten ist.

6. Stütze nach einem der vorhergehenden Ansprüche, wobei die Stütze (1) aus einem wärmeleitfähigen Material hergestellt ist.

7. Anordnung, die Teil eines Wischersystems, das eine elektrische Antriebseinheit (17) und eine Stütze (1) nach einem der vorhergehenden Ansprüche umfasst, ist, wobei die elektrische Autriebseinheit (17) eine Flachstelle (51) in Kontakt mit dem Kühlkörper (40) umfasst.

8. Anordnung nach Anspruch 7, wobei die elektrische Antriebseinheit (17) eine Steuervorrichtung (20) umfasst, die aus mindestens einer Leistungselektronikkomponente (50) besteht, wobei die Leistungselektronikkomponente mit der Flachstelle (51) in Kontakt ist.

9. Wischersystem, das einen Wischerarm (9) und eine Anordnung nach einem der Ansprüche 7 oder 8 umfasst.

## Claims

1. Mount (1) intended to connect at least mechanically a vehicle to an electric drive unit (17) of a wiping system, the mount (1) comprising a heat sink (40) capable of dissipating a heat flow from the electric drive unit (17), the heat sink (40) comprising at least one wall (41) forming a body (3) of the mount (1), said wall (41) being capable of being brought into contact with the electric drive unit (17), the wall (41) further extending in a plane parallel to and distinct from a plane in which the body (3) extends so as to form a cavity (42) having an orifice (16), **characterized in that** it comprises a device for channelling (15) a liquid, in which the orifice (16) forms an outlet for the liquid.

2. Mount according to claim 1, wherein the cavity (42) comprises at least one cooling fin (47).

3. Mount according to claim 1 or 2, wherein the orifice (16) is adjacent to the wall (41).

4. Mount according to any of the preceding claims, comprising at least one growth (4a, 4b, 4c) coming from the body (3) and forming a fixing arm on the vehicle, a fixing device (11) on the vehicle being formed on one end of the growth.

5. Mount according to claim 4, wherein the heat sink (40) is formed on the mount (1) as an extension of a growth (4a, 4b, 4c), the orifice (16) being contained within a width of the growth.

6. Mount according to any of the preceding claims, wherein the mount (1) is made of a thermally conductive material.

7. An assembly forming a wiper system comprising an electric drive unit (17) and a mount (1) according to any of the preceding claims, the electric drive unit (17) comprising a plate (51) in contact with the heat sink (40).

8. Assembly according to claim 7, wherein the electric drive unit (17) comprises a control device (20) having at least one electronic power component (50), the electronic power component being in contact with the plate (51).

9. A wiper system comprising a wiper arm (9) and an assembly according to any of claims 7 or 8.
